# FASCICULE DE BREVET EUROPEEN

(11) **EP 3 984 922 B1**
(45) Date de publication et mention de la délivrance du brevet: **16.11.2022**
(21) Numéro de dépôt: 21194483.0
(22) Date de dépôt: 02.09.2021
(51) Int. Cl.: B65G 47/252, B07C 3/18, B07C 5/02, B07C 1/00, B65G 47/48

(54) **EQUIPEMENT POUR L'ALIMENTATION AUTOMATISÉE EN COLIS D'UN CONVOYEUR DE TRI**
AUSRÜSTUNG FÜR DIE AUTOMATISCHE ZUFÜHRUNG VON PAKETEN ZU EINEM SORTIERFÖRDERER
DEVICE FOR THE AUTOMATED SUPPLY OF PACKAGES TO A SORTING CONVEYOR

(30) Priorité: 13.10.2020 FR 2010452
(43) Date de publication de la demande: 20.04.2022
(73) Titulaire: Solystic, 92220 Bagneux (FR)
(72) Inventeur: BREYSSE, Steve, 07800 Saint Georges Les Bains (FR); ROCH, Olivier, 07800 Saint Georges Les Bains (FR); BLACHE, Richard, 07610 Lemps (FR); STUNER, Bruno, 75012 Paris (FR)
(74) Mandataire: IP Trust

(56) Documents cités:
- WO-A1-2016/128637
- WO-A1-2019/159411
- WO-A1-2020/093902
- CN-A- 106 694 385

## Description

### Domaine technique

L'invention concerne un équipement pour l'alimentation automatisée en colis d'un convoyeur de tri.

### Technique antérieure

Les plateformes logistiques comprennent aujourd'hui des équipements conçus pour alimenter des convoyeurs de tri en colis hétérogènes de manière automatisée.

Ces équipements comprennent généralement un bras robotisé permettant de séparer et d'individualiser les colis stockés en vrac sur une plateforme et de les déposer en série sur un convoyeur de tri comme divulgué dans le document WO2016/128637. Le document WO2016/128637 divulgue un équipement pour l'alimentation automatisée en colis d'un convoyeur de tri selon le préambule de la revendication 1.

Afin de trier les colis vers des sorties de tri appropriées, le convoyeur de tri comprend des capteurs aptes à détecter une indication de tri sur le dessus des colis.

Or, l'indiction de tri est généralement apposée sur une seules des faces du colis, face qui n'est pas forcément en vis-à-vis des capteurs du convoyeur de tri.

Des Opérateurs se chargent ainsi de retourner manuellement les colis sur le convoyeur de tri afin de présenter l'indication de tri en vis-à-vis des capteurs.

Cette opération manuelle représente une tâche fastidieuse et peu ergonomique pour les Opérateurs.

### Exposé de l'invention

La présente invention a pour objet un équipement pour l'alimentation automatisé en colis d'un convoyeur de tri contribuant à résoudre les problèmes mentionnés cidessus.

A cet effet, l'invention a pour objet un équipement pour l'alimentation automatisée en colis d'un convoyeur de tri, l'équipement comprenant une plateforme pour stocker temporairement un tas de colis disposés en vrac, un premier système de vision conçu pour former une image numérique du tas de colis en vrac qui est statique sur la plateforme, une unité de traitement de données paramétrée pour, à partir de l'image numérique, identifier un colis à individualiser lequel présente une face de préhension non recouverte par un autre colis, et apte à fournir des données indicatives de la position spatiale, l'orientation dans l'espace et les dimensions de cette face de préhension, et une tête de préhension pneumatique d'un bras robotisé qui est pilotée à partir des dites données pour prendre ce colis à individualiser par la face de préhension, caractérisé en ce que ledit l'équipement comprend un dispositif d'orientation de colis conçu pour retourner un colis de 180° par rapport à son orientation sur la plateforme et un second système de vision agencé sur le bras robotisé conçu pour former une image numérique de la face de préhension du colis à individualiser sur la plateforme, ladite unité de traitement de données étant paramétrée pour, à partir de cette image numérique, piloter le bras robotisé pour déposer le colis sur le convoyeur de tri en réponse à l'identification d'une information de tri ou pour déposer le colis sur le dispositif d'orientation en réponse à l'absence d'identification d'une indication de tri, en ce que le second système de vision est conçu pour réaliser une image numérique de la face de préhension du colis retourné de 180° sur le dispositif d'orientation, ladite unité de traitement de données étant paramétrée pour, à partir de cette image numérique, piloter le bras robotisé pour déposer le colis sur le convoyeur de tri en réponse à l'identification d'une information de tri ou pour déposer le colis dans un conteneur de rejet en réponse à l'absence d'identification d'une information de tri-et en ce que le dispositif de retournement comprend un support de réception pour colis montée pivotant de 180° et un support d'évacuation pour colis en vis-à-vis du support de réception, ledit support de réception comprenant une pluralité de ventouses conçues pour maintenir le colis contre le support de réception lors de son pivotement de 180°.

L'équipement selon l'invention peut avantageusement présenter les caractéristiques suivantes :
- la plateforme comprend un convoyeur d'évacuation de colis débouchant sur le conteneur de rejet, l'unité de traitement étant paramétrée pour, à partir de l'image numérique du tas de colis, identifier les colis hors format et pour piloter en retour le convoyeur d'évacuation afin d'évacuer les colis dans le container de rejet lorsque l'ensemble des colis restants sur la plateforme sont des colis hors format.

L'idée à la base de l'invention est d'utiliser un système complètement automatisé capable d'alimenter un convoyeur de tri en colis, de séparer et individualiser les colis, et d'orienter les colis avec la face du colis comprenant l'indication de tri vers le haut.

Plus particulièrement, l'idée consiste à utiliser un dispositif de retournement de colis et un système de vision intercalés entre la plateforme de stockage des colis et le convoyeur de tri, de sorte qu'un tri préalable de colis hors format ou spécifiques puisse être effectué.

### Brève description des dessins

La présente invention sera mieux comprise et d'autres avantages apparaîtront à la lecture de la description détaillée du mode de réalisation pris à titre d'exemple nullement limitatif et illustré par les dessins annexés, dans lesquels :
- [Fig.1] La figure 1 est une représentation schématique d'un équipement pour l'alimentation automatisé en colis d'un convoyeur de tri selon l'invention ;
- [Fig.2] La figure 2 est une représentation schématique vu de dessus d'une partie de l'équipement pour l'alimentation automatisé en colis d'un convoyeur de tri selon l'invention ;
- [Fig.3] La figure 3 est une représentation schématique en vue rapprochée du dispositif d'orientation selon l'invention ;
- [Fig.4] La figure 4 est une représentation schématique d'une cinétique de retournement de colis à l'aide du dispositif de retournement selon l'invention.

### Description détaillée de l'invention

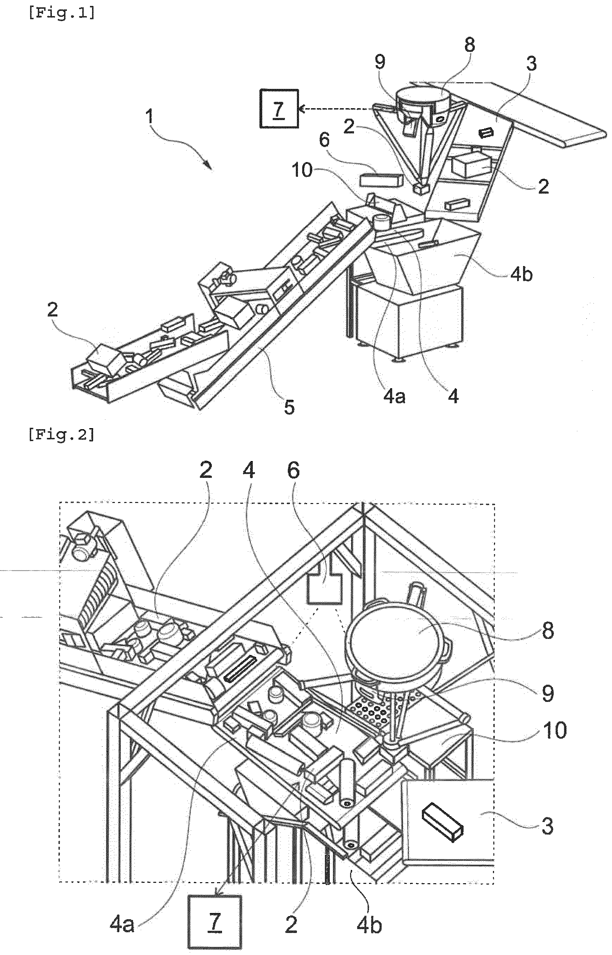

La figure 1 montre un équipement 1 pour l'alimentation automatisée en colis 2 d'un convoyeur de tri 3 selon l'invention qui est particulièrement bien adapté pour traiter des colis 2 de type « biface » et avec différents types de typologies mixés dans un même flux.

Par typologie on entend des colis 2 de type Polybags à emballage plastique ou carton.

L'équipement 1 comprend ici une plateforme 4 pour stocker temporairement un tas de colis 2 disposés en vrac, ici un convoyeur d'évacuation 4a de colis 2 automatisé débouchant sur un conteneur de rejet 4b, comme représenté sur la figure 2.

Un dispositif de dévraquage 5 peut également être prévu en amont du convoyeur d'évacuation 4a afin d'obtenir une meilleure répartition des colis 2 sur la plateforme 4.

L'équipement 1 comprend également un premier système de vision 6 conçu pour former une image numérique du tas de colis 2 en vrac en statique sur la plateforme 4.

A partir de l'image numérique prise par le premier système de vision 6, une unité de traitement 7 de données va identifier un colis 2 à individualiser, lequel présente une face de préhension non recouverte par un autre colis 2, et fournir en retour des données indicatives telles que la position spatiale, l'orientation dans l'espace et les dimensions de la face de préhension du colis 2 à individualiser.

A partir de l'image numérique du tas de colis 2, l'unité de traitement 7 va également identifier si l'ensemble des colis 2 restants sur la plateforme sont des colis hors format (grande taille et/ou formes complexes) ou spécifiques (comme les colis pharmaceutiques identifiables avec un logo) et piloter en retour le convoyeur d'évacuation 4a afin d'évacuer ces colis 2 dans le container de rejet 4b.

L'équipement 1 comprend en outre un bras robotisé 8 muni d'une tête de préhension pneumatique pilotée par l'unité de traitement pour prendre le colis 2 à individualiser par la face de préhension.

La tête de préhension pneumatique comprend ici des ventouses pilotées individuellement par l'unité de traitement 7 en fonction des données indicatives de la position spatiale, de l'orientation dans l'espace et des dimensions de la face de préhension.

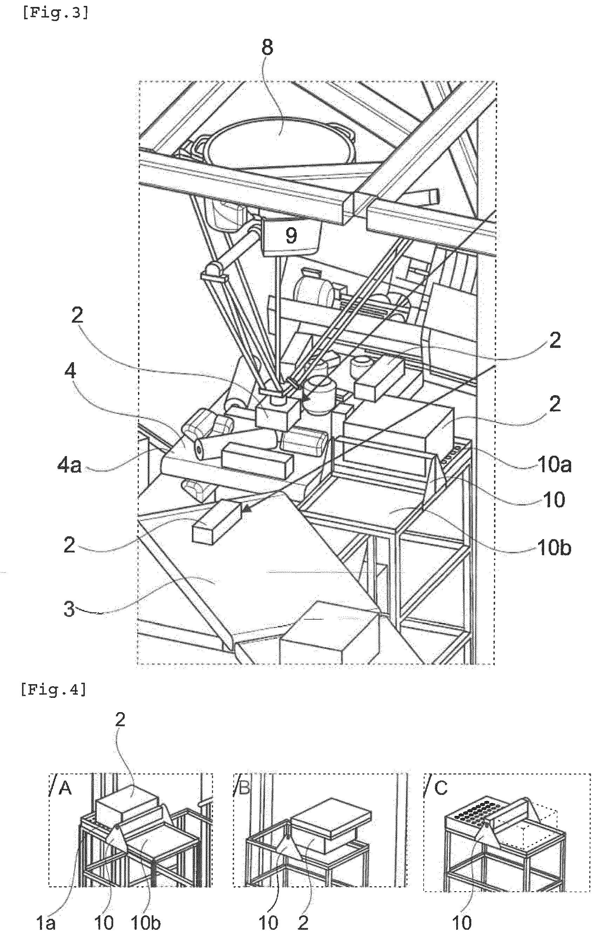

Le bras robotisé 8 est ainsi conçu pour récupérer un colis 2 depuis la plateforme 4 et le déposer selon la même orientation de face sur le convoyeur de tri 3, comme représenté sur la figure 3.

Or, l'absence d'une indication de tri sur la face de préhension empêcherait le colis 2 d'être trié par la suite par le convoyeur de tri 3.

Aussi, avant la récupération du colis 2 par le bras robotisé 8, une vérification de la présence d'une indication de tri est réalisée sur la face de préhension du colis 2 à individualiser.

L'équipement 1 comprend pour cela un second système de vision 9 agencé sur le bras robotisé 8 qui est conçu pour former une image numérique de la face de préhension du colis 2 à individualiser sur la plateforme 4.

Ainsi, en réponse à l'identification d'une information de tri sur la face de préhension du colis 2 à individualiser, l'unité de traitement 7 de données pilote le bras robotisé 8 afin de déposer le colis 2 sur le convoyeur de tri 3.

En revanche, en réponse à l'absence d'identification d'une indication de tri, l'équipement 1 comprend un dispositif d'orientation 10 du colis conçu pour retourner le colis 2 de 180° et ainsi présenter la face du colis qui est opposée à la face de préhension du colis lorsqu'il était stocké sur la plateforme 4.

Plus particulièrement, le dispositif d'orientation 10 comprend un support de réception 10a pour colis 2 montée pivotant de 180° et un support d'évacuation 10b pour colis 2 en vis-à-vis du support de réception 10a, ledit support de réception 10a comprenant une pluralité de ventouses 10c conçues pour maintenir le colis 2 contre le support de réception 10a lors de son pivotement de 180°.

La figure 4 montre justement une cinétique de retournement de colis à l'aide du dispositif de retournement 10 dans laquelle en A, le colis 2 est déposé sur le support de réception 10a, en B le support de réception 10a est pivoté de 180° avec le colis 2, et en C le support de réception libère le colis 2 (en stoppant l'aspiration), pivote de 180° pour recevoir un autre colis et permettre au colis stocké sur le support d'évacuation 10b d'être récupéré par le bras robotisé 8.

Le retournement à 180° est ici réalisé dès réception du colis 2, c'est-à-dire automatiquement, alors que les actions du bras robotisé 8 sont toutes pilotés par l'unité de traitement 7.

Le second système de vision 9 réalise ensuite une nouvelle image numérique du colis 2 retourné de 180° sur le dispositif d'orientation 10 afin de vérifier la présence d'une indication de tri sur la nouvelle face de préhension du colis 2.

Ainsi, en réponse à l'identification d'une information de tri sur la nouvelle face de préhension, l'unité de traitement 7 pilote le bras robotisé 8 pour déposer le colis 2 sur le convoyeur de tri 3.

En revanche, en réponse à l'absence d'identification d'une indication de tri, l'unité de traitement 7 pilote le bras robotisé 8 pour déposer le colis dans le conteneur de rejet 4b.

De manière avantageuse, l'unité de traitement 7 est paramétrée pour commander la vitesse de déplacement et l'accélération du bras robotisé 8 en fonction du type de colis 2 détecté par le premier système de vision 6.

Plus particulièrement, l'unité de traitement 7 est ici conçue pour augmenter la vitesse de déplacement du bras robotisé 8 et l'aspiration des ventouses pour les petits colis carton et pour diminuer la vitesse pour les grands colis de type Polybags.

## Revendications

1. Equipement (1) pour l'alimentation automatisée en colis (2) d'un convoyeur de tri (3), l'équipement comprenant une plateforme (4) pour stocker temporairement un tas de colis disposés en vrac, un premier système de vision (6) conçu pour former une image numérique du tas de colis en vrac qui est statique sur la plateforme, une unité de traitement (7) de données paramétrée pour, à partir de l'image numérique, identifier un colis à individualiser lequel présente une face de préhension non recouverte par un autre colis, et apte à fournir des données indicatives de la position spatiale, l'orientation dans l'espace et les dimensions de cette face de préhension, et une tête de préhension pneumatique d'un bras robotisé (8) qui est pilotée à partir des dites données pour prendre ce colis à individualiser par la face de préhension, **caractérisé en ce que** ledit l'équipement comprend un dispositif d'orientation (10) de colis conçu pour retourner un colis de 180° par rapport à son orientation sur la plateforme et un second système de vision (9) agencé sur le bras robotisé conçu pour former une image numérique de la face de préhension du colis à individualiser sur la plateforme, ladite unité de traitement de données étant paramétrée pour, à partir de cette image numérique, piloter le bras robotisé pour déposer le colis sur le convoyeur de tri en réponse à l'identification d'une information de tri ou pour déposer le colis sur le dispositif d'orientation en réponse à l'absence d'identification d'une indication de tri, **en ce que** le second système de vision est conçu pour réaliser une image numérique de la face de préhension du colis retourné de 180° sur le dispositif d'orientation, ladite unité de traitement de données étant paramétrée pour, à partir de cette image numérique, piloter le bras robotisé pour déposer le colis sur le convoyeur de tri en réponse à l'identification d'une information de tri ou pour déposer le colis dans un conteneur de rejet (10b) en réponse à l'absence d'identification d'une information de tri et **en ce que** le dispositif de retournement comprend un support de réception pour colis montée pivotant de 180° et un support d'évacuation pour colis en vis-à-vis du support de réception, ledit support de réception comprenant une pluralité de ventouses conçues pour maintenir le colis contre le support de réception lors de son pivotement de 180°.

2. Dispositif d'alimentation en colis selon la revendication précédente 1, **caractérisé en ce que** la plateforme comprend un convoyeur d'évacuation de colis débouchant sur le conteneur de rejet, et **en ce que** l'unité de traitement est paramétrée pour, à partir de l'image numérique du tas de colis, identifier les colis hors format et pour piloter en retour le convoyeur d'évacuation afin d'évacuer les colis dans le container de rejet lorsque l'ensemble des colis restants sur la plateforme sont des colis hors format.

## Patentansprüche

1. Einrichtung (1) zum automatischen Zuführen von Paketen (2) zu einem Sortierförderer (3), die Einrichtung umfassend eine Plattform (4) zum vorübergehenden Lagern einer Menge lose angeordneter Pakete, ein erstes Vision-System (6), das zum Bilden eines digitalen Abbildes der Menge von losen Paketen ausgelegt ist, die sich statisch auf der Plattform befindet, eine Datenverarbeitungseinheit (7), die zum Identifizieren, anhand des digitalen Abbildes, eines zu individualisierenden Pakets parametriert ist, das eine Greiffläche aufweist, die nicht durch ein anderes Paket verdeckt wird, und geeignet ist, um Daten bereitzustellen, die die räumliche Position, die Ausrichtung in dem Raum und die Abmessungen dieser Greiffläche angeben, und einen pneumatischen Greifkopf eines Roboterarms (8), der anhand dieser Daten zum Aufnehmen dieses zu individualisierenden Pakets über die Greiffläche gesteuert wird, **dadurch gekennzeichnet, dass** die Einrichtung eine Paketausrichtungsvorrichtung (10), die zum Wenden eines Pakets um 180° bezogen auf seine Ausrichtung auf der Plattform ausgelegt ist, und ein zweites Bildverarbeitungssystem (9) umfasst, das auf dem Roboterarm angeordnet ist und das zum Bilden eines digitalen Abbildes der Greiffläche des zu individualisierenden Pakets auf der Plattform ausgelegt ist, wobei die Datenverarbeitungseinheit zum Steuern, anhand dieses digitalen Abbildes, des Roboterarms zum Absetzen des Pakets auf dem Sortierförderer als Reaktion auf das Identifizieren von Sortierinformationen oder zum Absetzen des Pakets auf der Ausrichtungsvorrichtung als Reaktion auf das Ausbleiben des Identifizierens einer Sortierangabe parametriert ist, dass das zweite Vision-System zum Erzeugen eines digitalen Abbildes der Greiffläche des Pakets ausgelegt ist, das auf der Ausrichtungsvorrichtung um 180° gewendet ist, wobei die Datenverarbeitungseinheit zum Steuern, anhand dieses digitalen Abbildes, des Roboterarms zum Absetzen des Pakets auf dem Sortierförderer als Reaktion auf das Identifizieren von Sortierinformationen oder zum Absetzen des Pakets in einem Aussortierungsbehälter (10b) als Reaktion auf das Ausbleiben des Identifizierens von Sortierinformationen ausgelegt ist, und dass die Wendevorrichtung einen um 180° schwenkbar montierten Aufnahmeträger für Pakete und gegenüber des Aufnahmeträgers einen Abführträger für Pakete umfasst, der Aufnahmeträger umfassend eine Vielzahl von Saugnäpfen, die zum Halten des Pakets an dem Aufnahmeträger bei seinem Schwenken um 180° ausgelegt sind.

2. Vorrichtung zum Zuführen von Paketen nach dem vorstehenden Anspruch 1, **dadurch gekennzeichnet, dass** die Plattform einen Paketabführförderer umfasst, der zu dem Aussortierungsbehälter führt, und dass die Verarbeitungseinheit zum Identifizieren, anhand des digitalen Abbildes der Menge von Paketen, der Pakete mit Sonderabmessungen und zum Steuern wiederum des Abführförderers parametriert ist, um die Pakete in den Aussortierungsbehälter abzuführen, wenn alle Pakete, die auf der Plattform verbleiben, Pakete mit Sonderabmessungen sind.

## Claims

1. Apparatus (1) for the automated feeding of parcels (2) to a sorting conveyor (3), the apparatus comprising a platform (4) for temporarily storing a pile of parcels arranged loosely, a first vision system (6) designed to form a digital image of the pile of loose parcels which is static on the platform, a data processing unit (7) which is configured, on the basis of the digital image, to identify a parcel to be individualized which has a gripping surface not covered by another parcel, and is capable of providing data indicating the spatial position, orientation in space and dimensions of this gripping surface, and a pneumatic gripping head of a robotic arm (8), which head is controlled on the basis of said data to pick up said parcel to be individualized by the gripping surface, **characterized in that** said apparatus comprises a parcel orientation device (10) designed to turn a parcel 180° with respect to its orientation on the platform and a second vision system (9) which is arranged on the robotic arm and is designed to form a digital image of the gripping surface of the parcel to be individualized on the platform, said data processing unit being configured, on the basis of this digital image, to control the robotic arm to deposit the parcel on the sorting conveyor in response to the identification of a piece of sorting information or to deposit the parcel on the orientation device in response to the lack of identification of a sorting indication, **in that** the second vision system is designed to produce a digital image of the gripping surface of the parcel turned by 180° on the orientation device, said data processing unit being configured, on the basis of this digital image, to control the robotic arm to deposit the parcel on the sorting conveyor in response to the identification of a piece of sorting information or to deposit the parcel in a reject container (10b) in response to the lack of identification of a piece of sorting information and **in that** the turning device comprises a reception support for parcels mounted so as to pivot 180°, and a discharge support for parcels facing the reception support, said reception support comprising a plurality of suction cups designed to hold the parcel against the reception support as it pivots 180°.

2. Apparatus for feeding parcels according to the preceding claim 1, **characterized in that** the platform comprises a parcel discharge conveyor opening onto the reject container, and **in that** the processing unit is configured, on the basis of the digital image of the pile of parcels, to identify non-conforming parcels and to control the discharge conveyor in return in order to discharge the parcels into the reject container when all of the parcels remaining on the platform are non-conforming parcels.
